# EUROPÄISCHE PATENTSCHRIFT

(11) **EP 0 658 187 B1**
(45) Veröffentlichungstag und Bekanntmachung des Hinweises auf die Patenterteilung: **13.11.1996**
(21) Anmeldenummer: 93919190.4
(22) Anmeldetag: 26.08.1993
(51) Int. Cl.: C11D 1/83, C11D 1/12, C11D 3/04

(54) **FLÜSSIGE ALKALISCHE REINIGUNGSMITTEL MIT EINEM GEHALT AN SULFOÖLSAUREN DISALZEN UND DEREN VERWENDUNG**
ALKALINE LIQUID CLEANING AGENTS CONTAINING DI-SALTS OF SULPHOOLEIC ACIDS, AND THE USE OF SUCH AGENTS
NETTOYANTS ALCALINS LIQUIDES CONTENANT DES DISELS D'ACIDES SULFO-OLEIQUES ET LEUR UTILISATION

(30) Priorität: 04.09.1992 DE 4229589
(43) Veröffentlichungstag der Anmeldung: 21.06.1995
(73) Patentinhaber: Henkel Kommanditgesellschaft auf Aktien, 40191 Düsseldorf (DE)
(72) Erfinder: OUZOUNIS, Dimitrios, D-47807 Krefeld (DE); TINNEFELD, Bernd, D-40878 Ratingen (DE)
(86) Internationale Anmeldenummer: EP9302309
(87) Internationale Veröffentlichungsnummer: WO9405756

(56) Entgegenhaltungen:
- DE-A- 4 107 414
- DE-B- 1 216 470
- DE-B- 1 221 391
- US-A- 4 514 325

## Beschreibung

Die Erfindung betrifft flüssige alkalische Reinigungsmittel mit einem Gehalt an sulfoölsauren Disalzen sowie deren Verwendung als Reiniger in der Lebensmittelindustrie.

Große, teilweise schwer zugänglichen Oberflächen, wie sie in der Lebensmittelindustrie vorkommen, werden in der Hauptsache im Sprüh- bzw. Schaumreinigungsverfahren gereinigt. Hierfür werden je nach Verschmutzungsart, Materialbeschaffenheit und Reinigungsverfahren neutrale, alkalische und saure Reinigungsmittel eingesetzt. Hierbei finden aufgrund ihrer guten Reinigungsleistung gegenüber Fett- und Eiweißverschmutzungen alkalische, tensidhaltige Produkte mit oder ohne Oxidationsmittel eine breite Anwendung. Diese alkalischen Reiniger enthalten üblicherweise Natron- und/oder Kalilauge, Komplexbildner, Threshold-aktive Substanzen, Tenside, Korrosionsinhibitoren und Lösungsvermittler.

Wegen des besseren Handlings werden diese Produkte meistens als Flüssigkonzentrate vertrieben, so daß die Aufbereitung der Anwendungskonzentration mit Hilfe von Dosierpumpen bzw. Injektoren vorgenommen werden kann. Ein großes Problem für die Applikation der flüssigen Zubereitungen besonders mit Hilfe des Injektorprinzips stellt eine erhöhte Viskosität der Produkte dar. Ein weiteres Problem kommt hinzu, wenn die Reiniger in Räumen mit großen Temperaturunterschieden eingesetzt werden. In diesem Falle muß bei Veränderung der Viskosität eine erneute Konzentrationseinstellung des Applikationsgerätes vorgenommen werden.

Bei Betrieben mit hohem Chemikalienumsatz ist eine Einrichtung eines Konzentratlagers empfehlenswert, wobei die Produkte mit Hilfe von Dosierpumpen und langen Leitungen an den Einsatzort gepumpt werden. Daher ist der Einsatz von dünnflüssigen Produkten in diesem Bereich sehr sinnvoll. Die Einstellung der Viskosität erfolgt normalerweise mit Hilfe von Lösungsvermittlern, wie Mono- oder Dialkoholen, kurzkettigen Alkylbenzolsulfonaten und Alkanolaminen, soweit sie mit der entsprechenden Zubereitung konfektionierbar sind.

Eine Möglichkeit zur Verringerung des benötigten Lösungsvermittlergehaltes durch Verwendung von Lösungsvermittlern mit Tensidcharakter ist in der DE-A-41 07 414 beschrieben. In der vorstehend genannten Druckschrift werden sulfoölsaure Disalze, die in wäßriger und in schwach alkalischer Lösung gute Netzeigenschaften aufweisen, zur Konfektionierung von flüssigen, neutralen Reinigungsmitteln verwendet. Im stark alkalischen Medium sind diese sulfoölsauren Disalze jedoch nicht einsetzbar, da sie in diesem Medium nicht viskositätserniedrigend wirken, sondern zur Trennung des Systems führen. Die Synthese der genannten sulfoölsauren Disalze ist in der GB-A-1 278 421 und in der DE-A-39 26 344 offenbart.

Darüber hinaus können tensidhaltige hochalkalische Reiniger auch mit einem geringen Zusatz von Alkyl-(C₈-C₁₀)glucosid konfektioniert werden. Die Alkylglucoside zeigen allerdings nur einen geringen viskositätserniedrigenden Effekt.

Femer werden in der US-A-4 514 325 wasserhaltige Mittel zum Reinigen und Entfetten von Metalloberflächen beschrieben, die neben 5 bis 20 Gew.-% eines nicht-wasserlöslichen organischen Lösungsmittels als Lösungsvermittler (coupling agent) ein Salz einer sulfonierten monoungesättigten C₁₂ bis C₁₈-Fettsäure enthalten. Bevorzugt werden als Lösungsmittel halogenierte Kohlenwasserstoffe und als Lösungsvermittler das Natriumsalz der sulfonierten Ölsäure eingesetzt. Die Gegenwart des Lösungsvermittlers bedingt stabile Lösungen dieser Inhaltsstoffe, die ferner wasserlösliche Tenside enthalten können. Zur Verstärkung der Reinigungswirkung werden derartigen Formulierungen vorzugsweise wasserlösliche Lösungsmittel, beispielsweise Ethylenglycolbutylether, zugesetzt. Die Mittel weisen pH-Werte im Bereich von 0,5 bis 14 auf.

Demgegenüber bestand die Aufgabe der vorliegenden Erfindung darin, ein pumpfähiges alkalisches Reinigungsmittel zur Verfügung zu stellen, das darüber hinaus lagerstabil ist und nur geringe Viskositätsschwankungen, im Temperaturbereich von 5 bis 30 °C aufweist, dem Temperaturbereich, der in Lebensmittelbetrieben häufig anzutreffen ist.

Überraschenderweise wurde gefunden, daß ein Gemisch aus sulfoölsauren Disalzen und einem mit den sulfoölsauren Disalzen verträglichen weiteren Lösungsvermittler zu einer deutlichen Herabsetzung der Viskosität eines alkalischen Reinigungsmittels auf Tensidbasis führt.

Gegenstand der vorliegenden Erfindung ist demgemäß ein flüssiges, alkalisches Reinigungsmittel, enthaltend Alkalilauge, anionische und/oder nichtionische Tenside, Lösungsvermittler, sowie weitere übliche Bestandteile von Reinigungsmitteln, ausgewählt aus Komplexbildnem, Salzen, Threshold-aktiven Substanzen, Korrosionsinhibitoren und Oxidationsmitteln, welches dadurch gekennzeichnet ist. daß das Reinigungsmittel einen Gehalt an 5 bis 80 Gew.-% Alkalilauge, ausgewählt aus 50 %iger NaOH oder 45 %iger KOH, aufweist und ferner als Lösungsvermittler ein Gemisch aus sulfoölsauren Disalzen und 0,1 bis 10 Gew.-% eines mit den sulfoölsauren Disalzen verträglichen Lösungsvermittlers enthält, wobei die verträglichen Lösungsvermittler ausgewählt sind aus Salzen aromatischer Sulfonsäuren der Formel 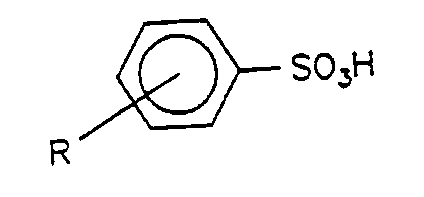 in der R Wasserstoff oder C₁₋₄-Alkyl ist, und einem 1:1-Gew.-Gemisch aus Caprylsäure und Triethanolamin.

Gemäß der vorliegenden Erfindung können die Reinigungsmittel 0,1 bis 15 Gew.-%, insbesondere 0,5 bis 10 Gew.-% sulfoölsaure Disalze enthalten. Hierbei sind insbesondere die Kaliumsalze der Sulfoölsäure bevorzugt.

Vorzugsweise enthält das erfindungsgemäße Reinigungsmittel 0,5 bis 5 Gew.-% der mit den Sulfoölsäure-Disalzen verträglichen Lösungsvermittler. Von den aromatischen Sulfonsäuren der vorstehend genannten Formel sind insbesondere die 4-Alkylsulfonsäuren und jene, in denen der Rest R ein C₁₋₂-Alkylrest ist, bevorzugt. Als Salze kommen vorzugsweise Alkalimetallsalze, insbesondere Natriumsalze, infrage. Als bevorzugtes Beispiel sei hier Natrium-toluolsulfonat genannt.

Gemäß der vorliegenden Erfindung sind insbesondere jene Reinigungsmittel bevorzugt, die 10 bis 40 Gew.-%, insbesondere 25 bis 30 Gew.-%, Alkalilauge enthalten.

Das erfindungsgemäße Reinigungsmittel enthält 2 bis 20 Gew.%, insbesondere 5 bis 10 Gew.-%, anionische und/oder nichtionische Tenside. Als Tenside werden dabei vorzugsweise Fettalkylsulfate, Fettalkylethersulfate, Fettalkylglucoside, Fettsäurealkanolamide, Alkylsulfonate, Alkylarylsulfonate und Amphotenside, insbesonder Acylamidopropyldimethylammoniumbetain und N, N-Dialkyl-fettamin-N-oxide, verwendet.

Als weitere Bestandteile kann das erfindungsgemäße Reinigungsmittel Komplexbildner, Salze, Threshold-aktive Substanzen, Korrosionsinhibitoren und Oxidationsmittel enthalten, wobei der Komplexbildnergehalt 0,5 bis 30 Gew.-%, insbesondere 1 bis 20 Gew.-%, des Reinigungsmittels beträgt. Als Komplexbildner finden insbesondere Ethylendiamin-N,N,N',N'-tetraacetate (EDTA), Nitrilotriacetate (NTA), Phosphonate, organische Phosphate, Citrate, Tartrate und Gluconate Verwendung.

Gemäß der vorliegenden Erfindung können als anorganische Salze Carbonate, Silikate und Phosphate verwendet werden.

Der Oxidationsmittelgehalt des erfindungsgemäßen Reinigungsmittels beträgt 10 bis 40 Gew.-%, insbesondere 15 bis 35 Gew.-%. Das Oxidationsmittel ist dabei vorzugsweise eine aktivchlorhaltige Zubereitung. Der Aktivchlorgehalt des Reinigungsmittels beträgt dabei bis zu 10 Gew.-%, insbesondere bis zu 5 Gew.-%.

Das erfindungsgemäße Reinigungsmittel weist eine dynamische Viskosität von unter 400 mPa.s, bevorzugt von unter 100 mPa.s und insbesondere von unter 50 mPa.s auf.

Die erfindungsgemäßen Reinigungsmittel können durch einfaches Einrühren der einzelnen Bestandteile in Wasser hergestellt werden.

Die vorliegende Erfindung betrifft weiterhin die Verwendung der vorstehend beschriebenen Reinigungsmittel als Reiniger in der Lebensmittelindustrie, insbesondere zum Sprüh- und Schaumreinigen.

Gegenüber bekannten, flüssigen alkalischen Reinigungsmitteln weisen die erfindungsgemäßen Reinigungsmittel der vorliegenden Erfindung eine deutlich geringere Viskosität und daher eine sehr gute Pumpfähigkeit auf. Darüber hinaus kann durch Wahl der Lösungsvermittlermenge bzw. durch Veränderung der Zusammensetzung des Lösungsvermittlergemisches die gewünschte Viskosität eingestellt werden.

Die Erfindung wird durch die folgenden Beispiele näher erläutert.

### Beispiele

### (Allgemeine Arbeitsvorschrift):

Die nachfolgenden Rezepturen werden durch Einrühren der einzelnen Bestandteile in den angegebenen Mengen in entmineralisiertes Leitungswasser hergestellt und ihre Viskosität nach Höppler bei 20 °C bestimmt.

Auf entsprechende Weise erhielt man die in Tabelle 1 angegebenen Gemische. Die Angaben sind als Gewichtsprozent-Angaben zu verstehen.

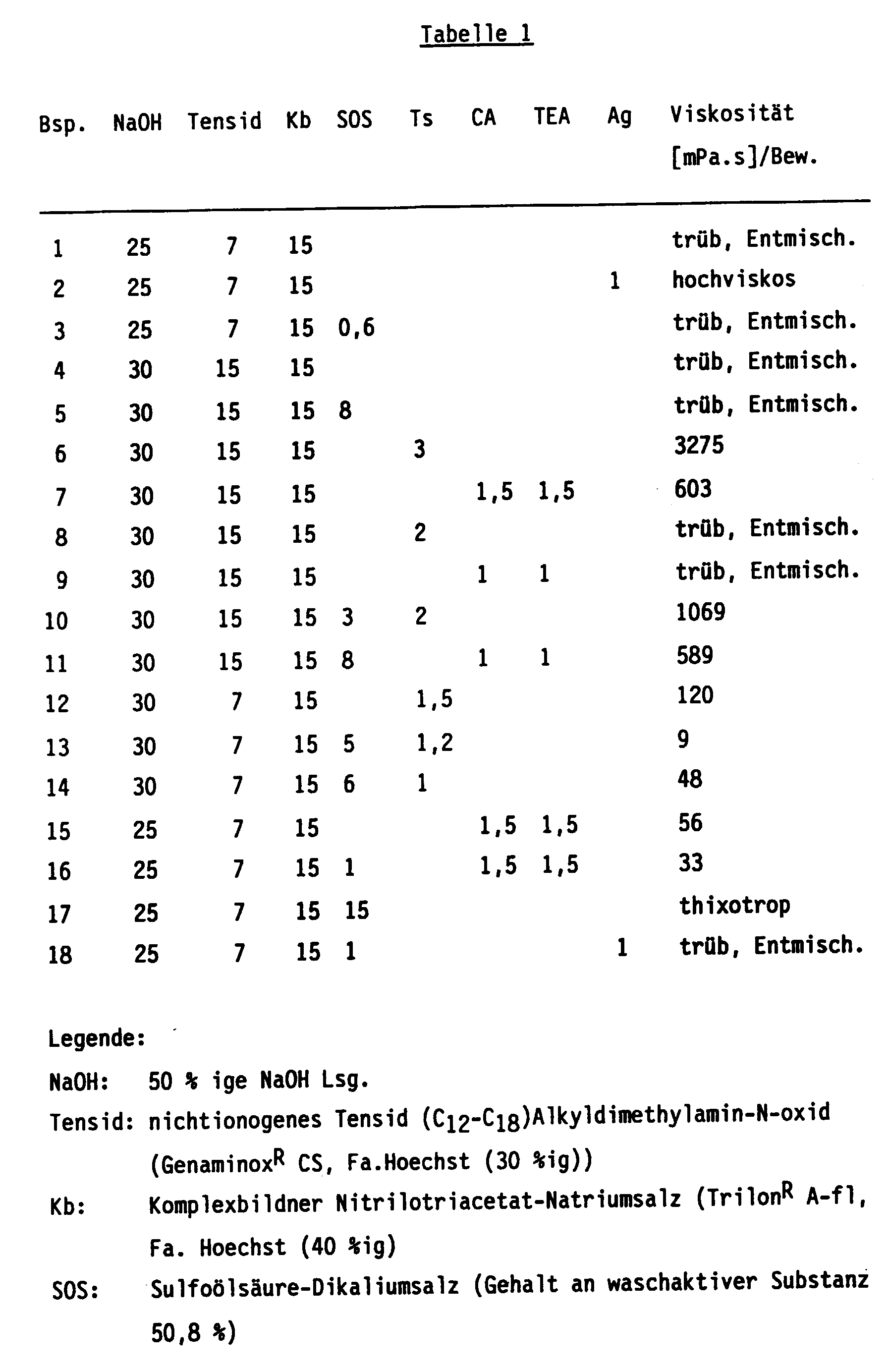

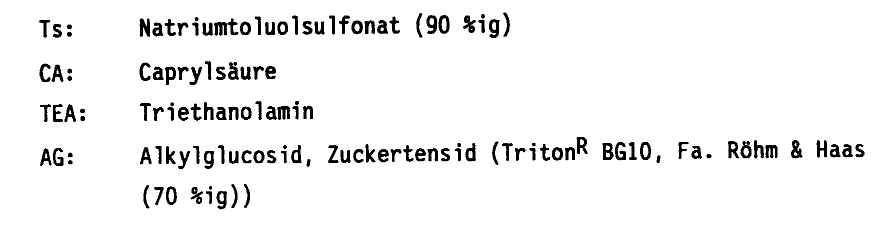

## Patentansprüche

1. Flüssiges, alkalisches Reinigungsmittel, enthaltend Alkalilauge, anionische und/oder nichtionische Tenside, Lösungsvermittler, sowie weitere übliche Bestandteile von Reinigungsmitteln, ausgewählt aus Komplexbildnern, Salzen, Threshold-aktiven Substanzen, Korrosionsinhibitoren und Oxidationsmitteln,
dadurch gekennzeichnet, daß das Reinigungsmittel einen Gehalt an 5 bis 80 Gew.-% Alkalilauge, ausgewählt aus 50 %iger NaOH oder 45 %iger KOH, aufweist und ferner als Lösungsvermittler ein Gemisch aus sulfoölsauren Disalzen und 0,1 bis 10 Gew.-% eines mit den sulfoölsauren Disalzen verträglichen Lösungsvermittlers enthält, wobei die verträglichen Lösungsvermittler ausgewählt sind aus Salzen aromatischer Sulfonsäuren der Formel 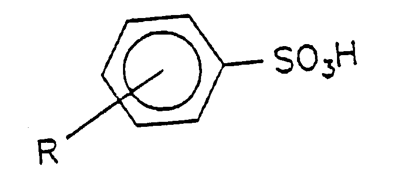 in der R Wasserstoff oder C₁₋₄-Alkyl ist, und einem 1:1Gew.-Gemisch aus Caprylsäure und Triethanolamin.

2. Reinigungsmittel nach Anspruch 1, dadurch gekennzeichnet, daß das Reinigungsmittel 0,1 bis 15 Gew.-%, insbesondere 0,5 bis 10 Gew.-%, sulfoölsaure Disalze enthält und die sulfoölsauren Disalze Kaliumsalze sind.

3. Reinigungsmittel nach Anspruch 1, dadurch gekennzeichnet, daß das Reinigungsmittel 0,5 bis 5 Gew.-% mit Sulfoölsäure-Disalzen verträgliche Lösungsvermittler enthält.

4. Reinigungsmittel nach Anspruch 1, dadurch gekennzeichnet, daß die aromatischen Sulfonsäuren 4-Alkylsulfonsäuren sind, R ein C₁₋₂-Alkyl ist, und die Salze Natriumsalze sind.

5. Reinigungsmittel nach einem oder mehreren der Ansprüche 1 bis 4, dadurch gekennzeichnet, daß das Reinigungsmittel 10 bis 40 Gew.-% und insbesondere 25 bis 30 Gew.-% Alkalilauge enthält.

6. Reinigungsmittel nach einem oder mehreren der Ansprüche 1 bis 5, dadurch gekennzeichnet, daß das Reinigungsmittel 2 bis 20 Gew.-%, insbesondere 5 bis 10 Gew.-%, anionische und/oder nichtionische Tenside enthält und die Tenside ausgewählt sind aus Fettalkylsulfaten, Fettalkylethersulfaten, Fettalkylglucosiden, Fettsäurealkanolamiden, Alkylsulfonaten, Alkylarylsulfonaten und Amphotensiden, insbesondere Acylamidopropyldimethylammoniumbetain und N,N-Dialkyl-fettamin-N-oxiden.

7. Reinigungsmittel nach einem oder mehreren der Ansprüche 1 bis 6, dadurch gekennzeichnet, daß der Komplexbildnergehalt des Reinigungsmittels 0,5 bis 30 Gew.-%, insbesondere 1 bis 20 Gew.-%, beträgt und die Komplexbildner ausgewählt sind aus Ethylendiamin-N,N,N',N'-tetraacetaten, (EDTA), Nitrilotriacetaten (NTA), Phosphonaten, organischen Phosphaten, Citraten, Tartraten und Gluconaten, die anorganischen Salze ausgewählt sind aus Carbonaten, Silikaten, Phosphaten; und
der Oxidationsmittelgehalt des Reinigungsmittels 10 bis 40 Gew.-%, insbesondere von 15 bis 35 Gew.-%, beträgt und das Oxidationsmittel vorzugsweise eine aktivchlorhaltige Zubereitung ist, wobei der Aktivchlorgehalt des Reinigungsmittels bis zu 10 Gew.-%, insbesondere bis zu 5 Gew.-%, beträgt.

8. Reinigungsmittel nach einem oder mehreren der Ansprüche 1 bis 7, dadurch gekennzeichnet, daß das Reinigungsmittel eine dynamische Viskosität von unter 400 mPa.s, bevorzugt von unter 100 mPa.s und insbesondere von unter 50 mPa.s aufweist.

9. Verwendung des Reinigungsmittels nach einem oder mehreren der Ansprüche 1 bis 8 als Reiniger für die Lebensmittelindustrie.

10. Verwendung nach Anspruch 9, dadurch gekennzeichnet, daß das Reinigungsmittel zum Sprüh- und Schaumreinigen verwendet wird.

## Claims

1. A liquid alkaline cleaning formulation containing alkali metal hydroxide, anionic and/or nonionic surfactants, solubilizers and other typical ingredients of cleaning formulations selected from complexing agents, salts, thresholdactive substances, corrosion inhibitors and oxidizing agents, characterized in that the cleaning formulation has a content of 5 to 80% by weight of alkali metal hydroxide selected from 50% NaOH or 45% KOH and contains as solubilizers a mixture of sulfooleic acid disalts and 0.1 to 10% by weight of a solubilizer compatible with the sulfooleic acid disalts, the compatible solubilizers being selected from salts of aromatic sulfonic acids corresponding to the following formula: 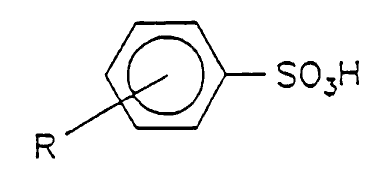 in which R is hydrogen or C₁₋₄ alkyl,
and a mixture of caprylic acid and triethanolamine in a ratio by weight of 1:1.

2. A cleaning formulation as claimed in claim 1, characterized in that it contains 0.1 to 15% by weight and, more particularly, 0.5 to 10% by weight of sulfooleic acid disalts and in that the sulfooleic acid disalts are potassium salts.

3. A cleaning formulation as claimed in claim 1, characterized in that the cleaning formulation contains 0.5 to 5% by weight of solubilizers compatible with sulfooleic acid disalts.

4. A cleaning formulation as claimed in claim 1, characterized in that the aromatic sulfonic acids are 4-alkyl sulfonic acids, R is a C₁₋₂ alkyl group and the salts are sodium salts.

5. A cleaning formulation as claimed in one or more of claims 1 to 4, characterized in that it contains 10 to 40% by weight and, more particularly, 25 to 30% by weight of alkali metal hydroxide.

6. A cleaning formulation as claimed in one or more of claims 1 to 5, characterized in that it contains 2 to 20% by weight and, more particularly, 5 to 10% by weight of anionic and/or nonionic surfactants and in that the surfactants are selected from fatty alkyl sulfates, fatty alkyl ether sulfates, fatty alkyl glucosides, fatty acid alkanolamides, alkyl sulfonates, alkylaryl sulfonates and amphoteric surfactants, more particularly acylamidopropyl dimethyl ammonium betaine and N,N-dialkyl fatty amine N-oxides.

7. A cleaning formulation as claimed in one or more of claims 1 to 6, characterized in that the content of complexing agents in the cleaning formulation is from 0.5 to 30% by weight and, more particularly, from 1 to 20% by weight; in that the complexing agents are selected from ethylenediamine-N,N,N',N'-tetraacetates (EDTA), nitrilotriacetates (NTA), phosphonates, organic phosphates, citrates, tartrates and gluconates; in that the inorganic salts are selected from carbonates, silicates, phosphates; in that the content of oxidizing agent in the cleaning formulation is from 0 to 40% by weight and, more particularly, from 15 to 35% by weight and in that the oxidizing agent is preferably a preparation containing active chlorine, the active chlorine content of the cleaning formulation being up to 10% by weight and, more particularly, up to 5% by weight.

8. A cleaning formulation as claimed in one or more of claims 1 to 7, characterized in that it has a dynamic viscosity below 400 mPa·s, preferably below 100 mPa·s and more preferably below 50 mPa·s.

9. The use of the cleaning formulation claimed in one or more of claims 1 to 8 as a cleaner in the food industry.

10. The use claimed in claim 9, characterized in that the cleaning formulation is used for spray and foam cleaning.

## Revendications

1. Produit de nettoyage alcalin, liquide, contenant de la lessive alcaline, des tensioactifs anioniques et/ou non ioniques, des dissolvants ainsi que d'autres composants habituels des produits de nettoyage choisis parmi les complexants, les sels, les substances actives à seuil, les inhibiteurs de corrosion et les agents oxydants,
caractérisé en ce que
le produit de nettoyage contient 5 à 80 % en poids de lessive alcaline choisie parmi les solutions à 50 % de NaOH ou à 45 % de KOH et aussi il comprend, comme dissolvant, un mélange de disels d'acide sulfo-oléique et 0,1 à 10 % en poids d'un dissolvant compatible avec les disels d'acides sulfo-oléique, où on choisit les dissolvants compatibles parmi les sels d'acides sulfoniques aromatiques de formule : 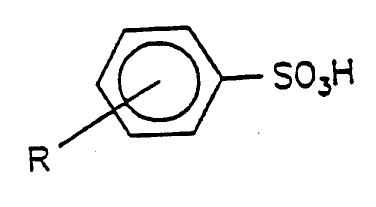 où R est l'hydrogène ou un alkyle C₁₋₄ et un mélange 1:1 d'acide caprylique et de triéthanolamine.

2. Produit de nettoyage selon la revendication 1,
caractérisé en ce que
le produit de nettoyage contient 0,1 à 15 % en poids, notamment 0,5 à 10 % en poids, de disels d'acide sulfo-oléique et que les disels d'acide sulfo-oléique sont des sels de potassium.

3. Produit de nettoyage selon la revendication 1,
caractérisé en ce que
le produit de nettoyage contient 0,5 à 5 % en poids de dissolvants compatibles avec des disels d'acide sulfo-oléique.

4. Produit de nettoyage selon la revendication 1,
caractérisé en ce que
les acides sulfoniques aromatiques sont des acides 4-alkylsulfoniques, R est un alkyle C₁₋₂ et les sels sont des sels de sodium.

5. Produit de nettoyage selon l'une ou plusieurs des revendications 1 à 4,
caractérisé en ce que
le produit de nettoyage contient 10 à 40 % en poids, et notamment 25 à 30 % en poids, de lessive alcaline.

6. Produit de nettoyage selon l'une ou plusieurs des revendications 1 à 5,
caractérisé en ce que
le produit de nettoyage contient 2 à 20 % en poids, notamment 5 à 10 en poids, de tensioactifs anioniques et/ou non ioniques et qu'on choisit les tensioactifs parmi les alkylsulfates, les éthersulfates d'alkyles gras, les alkylglucosides gras, les alcanolamides d'acides gras, les alkylsulfonates, les alkylarylsulfonates et les tensioactifs amphotères, notamment des acylamidopropyldiméthylammoniumbétaines et les N-oxydes de N,N-dialkylamines grasses.

7. Produit de nettoyage selon l'une ou plusieurs des revendications 1 à 6, caractérisé en ce que
la teneur en complexant du produit de nettoyage est 0,5 à 30 % en poids, notamment 1 à 20 % en poids, et les complexants sont choisis parmi les éthylènediamine-N,N,N',N'-tétraacétates (EDTA), les nitrilotriacétates (NTA), les phosphonates, les phosphates organiques, les citrates, les tartrates et les gluconates, on choisit les sels minéraux parmi les carbonates, les silicates, les phosphates, et la teneur en agent oxydant du produit de nettoyage est 10 à 40 % en poids, notamment 15 à 35 % en poids, et l'agent oxydant est, de préférence, une préparation contenant du chlore actif, où la teneur en chlore actif peut atteindre 10 % en poids, notamment 5 % en poids.

8. Produit de nettoyage selon l'une ou plusieurs des revendications 1 à 7,
caractérisé en ce que
le produit de nettoyage a une viscosité dynamique inférieure à 400 mPa.s, de préférence inférieure à 100 mPa.s, et notamment inférieure à 50 mPa.s.

9. Utilisation du produit de nettoyage selon l'une ou plusieurs des revendications 1 à 8, comme nettoyant pour l'industrie alimentaire.

10. Utilisation selon la revendication 9,
caractérisée en ce qu'
on utilise le produit de nettoyage pour le nettoyage par pulvérisation et à la mousse.
